Europäisches Patentamt

European Patent Office

Office européen des brevets

(19)

(11) Publication number: **0 282 252 B1**

(12) **EUROPEAN PATENT SPECIFICATION**

(45) Date of publication of patent specification: **17.06.92**  (51) Int. Cl.5: **B60C 11/12**, B60C 11/01

(21) Application number: **88301958.0**

(22) Date of filing: **07.03.88**

(54) **Radial tyre.**

(30) Priority: **10.03.87 JP 56145/87**

(43) Date of publication of application:
**14.09.88 Bulletin 88/37**

(45) Publication of the grant of the patent:
**17.06.92 Bulletin 92/25**

(84) Designated Contracting States:
**DE FR GB**

(56) References cited:
**EP-A- 0 205 233**
**DE-A- 2 918 183**
**DE-A- 2 941 852**
**GB-A- 2 190 048**

**PATENT ABSTRACTS OF JAPAN, vol. 8, no. 207 (M-327)[1644], 21st September 1984; & JP-A-59 96 002 (SUMITOMO GOMU KOGYO K.K.) 02-06-1984**

**INTERNATIONAL POLYMER SCIENCE AND TECHNOLOGY, vol. 3, no. 3, 1976, page T/40, Shrewsbury, GB; G.V. NADEZHDIN et al.: "The influence of division of tread pattern on tyre wear"**

(73) Proprietor: **SUMITOMO RUBBER INDUSTRIES, CO. LTD**
**No. 1-1, Tsutsui-cho 1-chome**
**Chuo-ku Kobe-shi Hyogo-ken 651(JP)**

(72) Inventor: **Ochiai, Kiyoshi**
**4-1-908, Manabigaoka 3-chome**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9OT(GB)**

## Description

The present invention relates to a pneumatic tyre, and more particularly a rib pattern radial ply tyre, which is provided in both side portions of the tread with a plurality of sipes to prevent uneven wear of the tread.

In general the tread region of a radial ply tyre is reinforced with a belt layer which comprises plural plies of steel cords arranged at an angle of 15 degrees to 70 degrees with respect to the circumferential direction of the tyre. Accordingly, the tread part of such a radial tyre is rigid, and both side portions of the tread have less ground contacting pressure than the central portion. As a result, the amount of slip of the tread on the ground becomes larger in the side portions than the central portion and uneven wear in the tread shoulders, which is called shoulder wear is most liable to happen. This problem is particularly noticeable in heavy duty tyres for trucks and buses.

In order to reduce the problems of such uneven wear, it is known in the art to provide a pltlrability of short sipes in both side portions of the tread to lessen the slip of those portions on the ground by means of the lowered apparent rigidity of the tread rubber.

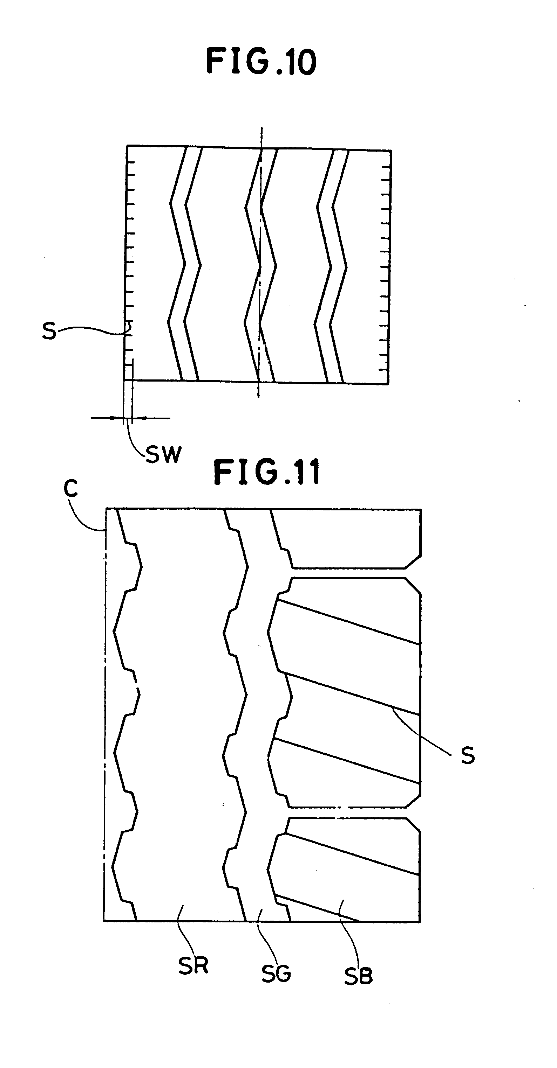

Such a construction is shown in Fig.10, in which the short sipes (S) are short and shallow and arranged to extend parallel to the axial direction of the tyre. The sipes have lengths SW less than 5% of the tread width. Furthermore, the circumferential grooves which define the side ribs are zigzag grooves. Such sipes (S) are, however, so short and shallow that they can not control the distribution of the ground pressure in the widthwise direction of the tread and so they are not effective in preventing the uneven wear first mentioned.

In the Patent Document EP-A-0 205 233 there is disclosed a tyre tread pattern having in the ribs or blocks on the shoulder a plurality of narrow cut grooves to control the heat generation and to prevent slippage of tread rubber in the shoulder parts.

Also in Japanese Gazette TOKKAI No 58-162643, as shown in Fig.11, sipes (S) are provided in blocks SB which are defined by a zigzag circumferential groove SG and axial grooves extending therefrom to the tread edge. Such free blocks are liable to move and thus the sipes further decrease the rigidity especially in the projecting portion of the zigzag edge of the block, and uneven wear often called railway wear is soon caused.

The object of the present invention is to provide a radial ply tyre especially suitable for heavy duty use, in which the problem of this uneven wear is reduced by unifying' the amount of slip of the tread on the ground in the widthwise direction.

According to the invention a radial tyre comprises a tread provided with a plurality of grooves extending circumferentially of the tyre to form a rib pattern thereon, and the tread is provided in both side portions, each having a width of 10 to 35% of the tread width from the edges of the tread, with sipes, said sipes having a depth of 20 to 120% of a depth of said groove and arranged at intervals of 8 to 20mm in the circumferential direction of the tyre and at an angle of 5 to 25 degrees with respect of the axial direction of the tyre, characterised in that each sipe is provided with a portion parallel to said axial direction of the tyre.

Preferably, the sipes increase in depth gradually towards the respective edges of the tread.

In the present invention a sipe is a widthless cut formed by using a thin blade after vulcanisation of the tyre, that is, the sipe has substantially no groove width.

Am embodiment of the present invention will now be described, by way of example only, in conjunction with the attached diagrammatic drawings in which:-

Fig.1 is a partial view showing a tread of an embodiment of the present invention;
Fig.2 is a sectional view taken along the line A-A of Fig.1;
Fig.3 is a graph showing the distribution of the ground pressure in the widthwise direction of the tread;
Fig.4 is a graph showing the distribution of the amount of slip in the widthwise direction of the tread
Fig.5. is a partial view showing a tread of another embodiment of the present invention
Fig.6. is a partial view showing a tread of another embodiment of the present invention
Figs.7 to 9 are sectional views taken along the line B-B of Fig.5 and showing alternative shapes for the sipe, and
Figs.10 and 11 are partial views showing tyres according to the prior art.

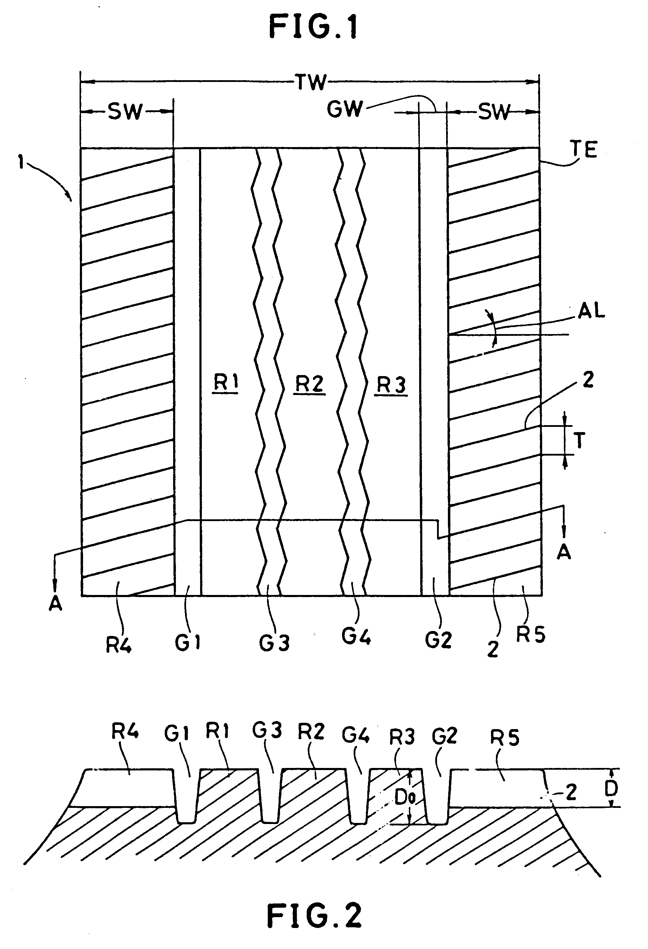

In Figures 1 and 2, a tread 1 is provided with a pair of straight circumferentially extending grooves G1 and G2 and a pair of zigzag circumferentially extending grooves G3 and G4 arranged therebetween so that the tread 1 is divided into two side ribs R4 and R5 and three central ribs, R2 and R3.

The width of each side rib R4 or R5 is in the range of 10 to 35% of the total tread width TW. Parallel sipes 2 are formed in the side ribs which extend straight across the side ribs R4 or R5 from the tread edge TE to the straight groove G1 or G2.

The width GW of the circumferential groove G2 is 5 to 8% of the tread width TW. If the width GW is smaller than 5%, the directional stability of the tyre us reduced and wet grip is lowered. If it is more than 8% the ground contacting area of the tyre is reduced and wear resistance becomes worse.

The sipes 2 are provided in both side portions of the tread and extend inwardly for 10 to 35% of the tread width from the tread edge TE.

This means the length SW of the sipe 2 in the axial direction of the tyre is 10 to 35% of the tread width TW, whereby the distribution of the ground pressure, that is, the distribution of the amount of slip is equalised in the widthwise direction across the tread.

The sipes 2 make the tread rubber in the region where there are sipes comparatively soft as a whole. Accordingly, the rubber can be more easily bent and pressed to the ground thus increasing the ground pressure in the side portions. As a result, the amount of slip on the road surface and the resultant uneven wear is decreased and traction and braking force transmission is increased.

Furthermore the edges formed by the sipes 2 give improved wet grip.

If the sipes 2 are too shallow, the above-mentioned effects are not obtained. On the other hand if the sipes 2 are too deep, the rigidity of the tread becomes too small and the tread is liable to have portions torn off and thus be damaged.

Accordingly, the depth D of the sipes 2 is 20 to 120% more preferably 60 to 100% of the depth Do of the circumferential grooves. If there are different depth grooves in the tread then the depth Do is taken for the deepest groove.

The sipes 2 are arranged at an angle AL within a range of 5 to 25 degrees with respect to the axial direction of the type. If the angle AL is smaller than 5 degrees the central portion of the side rib R4, R5 is decreased in rigidity, and the wear resistance and strength thereof becomes too little. On the contrary, if more than 25 degrees the amount of slip increases, and the meritorious effect of the sipes is lost.

Furthermore, the sipes 2 are arranged at intervals T of 8 to 20mm in the circumferential direction around the type. If the interval T is larger than 20mm, the rigidity of the side rib becomes too high, and the amount of slip thereof or uneven wear is not reduced. On the contrary, if it is smaller than 8mm, the wear resistance and the strength and the strength thereof are decreased.

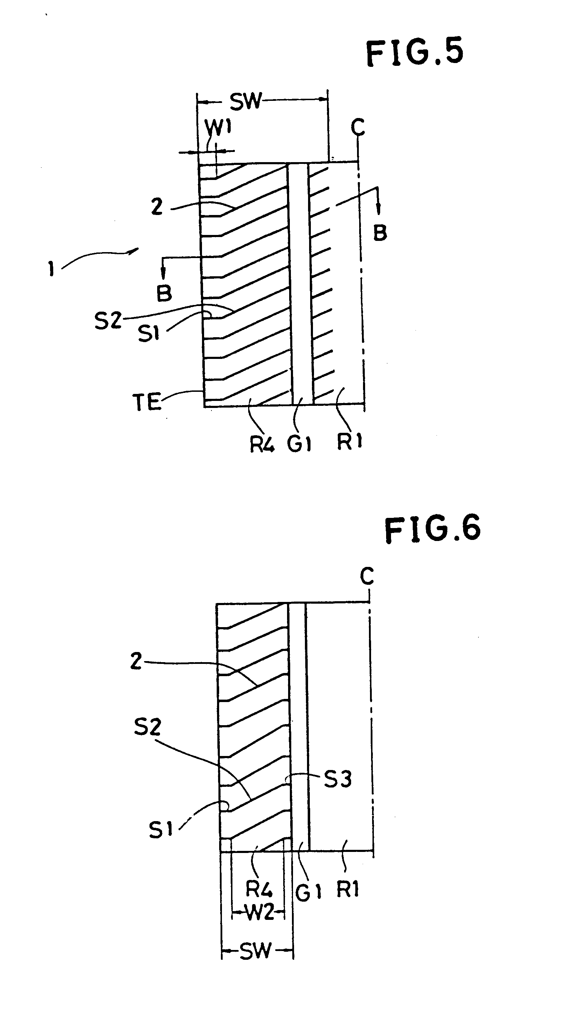

Figure 5 shows a tread of another embodiment of the present invention in which the tread 1 is provided with a pair of straight circumferentially extending grooves G1 and G2, whereby the tread 1 is divided into two side ribs R4 and R5 (R5 is not shown) and a central rib R1 therebetween. Each sipe 2 extends across the side rib R4 and R5 from the tread edge TE into the central rib R1 beyond the straight groove G1 or G2, with the result that the slip of the rib edge on each side of the straight groove is lessened, and as a result the generation of railway wear is effectively suppressed.

Also, each sipe 2 is provided axially outside its main portion S2 with a portion S1 nearly parallel with the axial direction of the tyre. The length W1 of the portion S1 is not more than 10% of the tread width TW and not more than 50% of the total length SW of the sipe 2. Preferably, the angle of the portion S1 to the axial direction of the tyre is not more than 5 degrees. For that reason, the slip of the tread edge portions is reduced and edge-wear is also efficiently prevented.

Figure 6 shows a tread of another embodiment of the present invention in which the tread 1 is provided with a pair of straight grooves G1 and G2, whereby the tread 1 is divided into two side ribs R4 and R5 (R5 is not shown) and a central rib R1 therebetween. Each sipe 2 extends across the side rib R4 or R5 from the tread edge TE to the straight groove G1 or G2. Also, each sipe 2 is provided axially outside and inside its main portion S2 with a portion S1 and a portion S3 both nearly parallel to the axial direction of the tyre. The length W2 of the portion S2 in the axial direction is not less than 50% of the length SW of the sipe 2.

In the embodiments shown in Figure 5 or 6 (which show the left half of the tread thereof) the right half can be formed either in a line symmetry with respect to the centre line C, or in a point symmetry.

To control the ground pressure distribution in the widthwise direction of the tread it is also effective to vary the depth of the sipes. The Figures 2, 7, 8 and 9 show the modifications to the sipes of the present invention. Figure 2 shows a sectional view taken along the line A-A of Fig.1, and Figures 7,8 and 9 show a sectional view taken along the line B-B of Figure 5 and the modifications of the sipe therein.

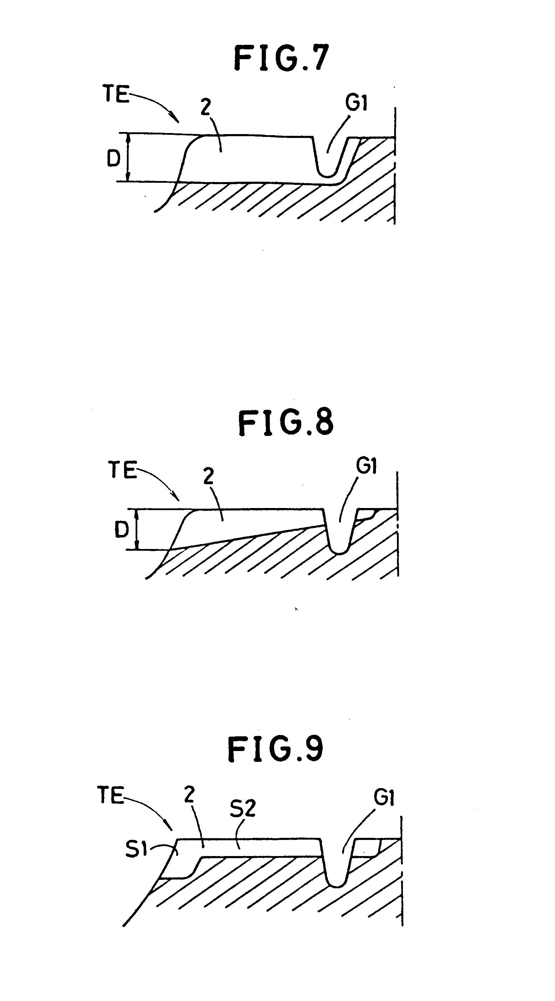

In Figure 2 the depth D of the sipe 2 is constant and less than the depth Do of the groove G1. In Figure 7 the depth D of the sipe 2 is constant and more than the depth Do of the groove G1. In Figure 8 the depth D increases gradually toward the tread edge TE from its inner end. In Figure 9 the axially outer portion S1 of the sipe 2 is deeper than the main portion S2. Such modifications can also be applied to the sipes in Figures 1 or 6.

Such plural kinds of sipes with different length and/or depth may be combined in one tread.

The inventor made, by way of trial, 10.00R20 steel radial tyres for truck and bus as specified in Table 1, and mounted the tyres on the front wheels of a vehicle.

The uneven wear of the shoulder parts of the tyres was measured after 30,000 km on a road. To check resistance to wear and wet braking characteristics some tyres were subjected to tests, the results of which are shown in Table 1 with relative values.

TABLE 1

| Ex.No. | Tread Pattern (Fig. No.) | SW/TW (%) | D/Do (%) | AL (°) | Thickness of Sipe (mm) | T (mm) | GW/TW (%) | Shoulder Wear *4 | Railway Wear (Yes or No) | Wear Resistance *5 | Wet Grip *5 | Edge wear Resistance *5 |
|---|---|---|---|---|---|---|---|---|---|---|---|---|
| **Embodiments** | | | | | | | | | | | | |
| 1 | 1 | 25 | 75 | 20 | 0.2 | 15 | 7.3 | 50 | N | 100 | 100 | 100 |
| 2 | 1 | 25 | 50 | 20 | 0.2 | 15 | 7.3 | 55 | N | | | |
| 3 | 1 | 25 | 100 | 20 | 0.2 | 15 | 7.3 | 50 | N | | | |
| 4 | 1 | 25 | 75 | 5 | 0.2 | 15 | 7.3 | 50 | N | | | |
| 5 | 1 | 25 | 75 | 25 | 0.2 | 15 | 7.3 | 50 | N | | | |
| 6 | 1 | 25 | 75 | 20 | 0.2 | 8 | 4 | 50 | N | 107 | 90 | |
| 7 | 1 | 25 | 75 | 20 | 0.2 | 8 | 9 | 50 | N | 90 | | |
| 8 | 5&7 | 25 | 110 | 20&0 | 0.2 | 15 | 7.3 | 50 | N | 100 | 105 | 110 |
| 9 | 5&9 | 25 | 75&40 | 20&0 | 0.2 | 15 | 7.3 | 50 | N | 105 | 105 | 110 |
| **Comparative Ex.** | | | | | | | | | | | | |
| 1 | 11 | 20-25 | 75 | 20 | 0.2 | 15 | 6.7 | 55 | Y | | | |
| 2 | 10 | 5 | 75 | 0 | 0.2 | 15 | 6.3 | 80 | N | | | |
| 3 | 1 | 25 | 10 | 20 | 0.2 | 15 | 7.3 | 85 | N | | | |
| 4 | 1 | 25 | 130 | 20 | 0.2 | 15 | 7.3 | *1 | N | | | |
| 5 | 1 | 25 | 75 | 3 | 0.2 | 15 | 7.3 | *2 | N | | | |
| 6 | 1 | 25 | 75 | 30 | 0.2 | 15 | 7.3 | 90 | N | | | |
| 7 | 1 | 75 | -- | -- | -- | -- | 7.3 | 100 | N | | | |
| 8 | 1 | 25 | 75 | 20 | 0.5 | 15 | -- | *3 | N | | | |
| 9 | 1 | 75 | 75 | 20 | 0.2 | 5 | 7.3 | *1 | N | | | |
| 10 | 1 | 75 | 75 | 20 | 0.2 | 25 | 7.3 | 80 | N | | | |

*1, *2: tread was damaged in the test

*3: uneven wear took place in both sides of the sipe with respect to the circumferential direction

*4: the smaller the index, the better the performance

*5: the larger the index, the better the performance

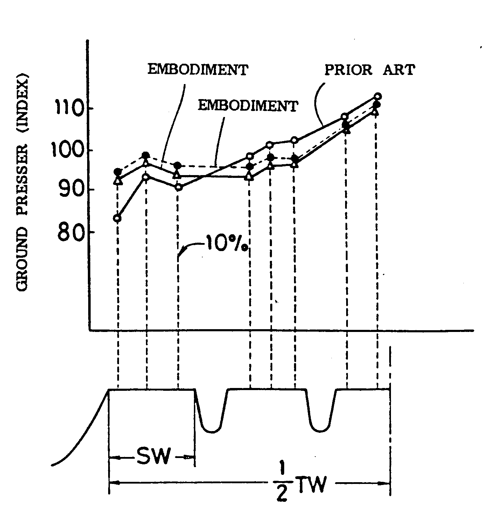

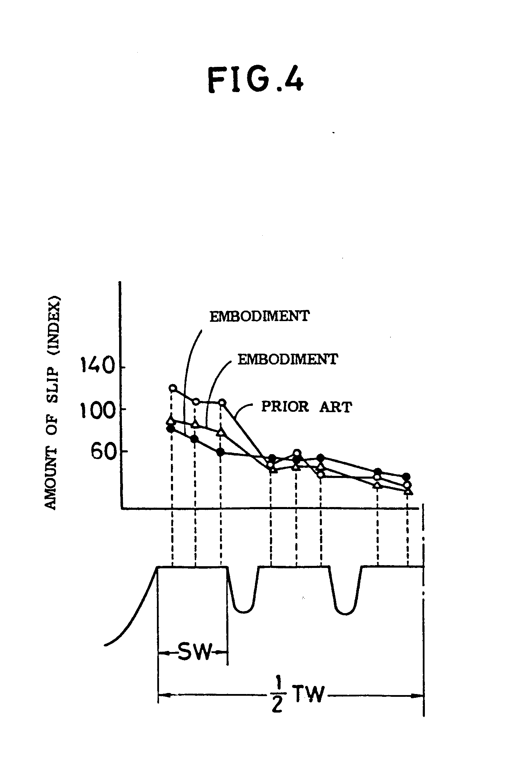

The ground pressure distribution and the slip distribution in the widthwise direction of the tread for the tyres of embodiments 1 and 5 and comparative example tyre 7 were measured, and the measurements are shown in Figures 3 and 4, respectively. Figure 3 shows the ground pressure of the comparative example tyre 7, corresponding to a conventional five rib pattern tyre, to be smaller than those of the tyres of embodiments 1 and 5 in the range of 35% and more especially in the range of 10% of the tread width TW from the tread edge. It is apparent from Figures 3 and 4 that the tyres according to the present invention

4

were improved in uniformity for both the ground pressure distribution and the slip amount distribution.

As mentioned above to equalise the ground pressure distribution in the widthwise direction of the tread, the present invention optimises the sipes of the rib pattern tyre in depth, intervals, angle at which the sipes are arranged, and range in which the sipes are provided. Accordingly, in this invention the amount of slip is decreased in the shoulder parts, and uneven wear is effectively prevented. By the way, the circumferential grooves which define the side ribs are straight, whereby the rigidity of the side rib is unified and railway wear is effectively prevented.

**Claims**

1. A radial tyre having a tread (1) provided with a plurality of grooves (G) extending circumferentially of the tyre to form a rib pattern thereon, and the tread is provided in both side portions (R4,R5), each having a width of 10 to 35% of the tread width (TW) from the edges of the tread, with sipes (2), said sipes having a depth (D) of 20 to 120% of a depth (Do) of said groove (G) and arranged at intervals (T) of 8 to 20mm in the circumferential direction of the tyre and at an angle (AL) of 5 to 25 degrees with respect of the axial direction of the tyre, characterised in that each sipe (2) is provided with a portion (S1) parallel to said axial direction of the tyre.

2. A radial tyre according to claim 1, characterised in that said sipes (2) increase in depth gradually towards the respective edges of the tread.

3. A radial tyre according to either of claims 1 or 2 characterised in that the width (GW) of each circumferential groove (G1,G2) is 5 to 8% of the tread width (TW).

**Revendications**

1. Pneumatique à carcasse radiale ayant une bande de roulement (1) qui comporte plusieurs gorges (G) disposées suivant la circonférence du pneumatique pour la formation d'une sculpture à côtes, la bande de roulement ayant, dans les deux parties latérales (R4, R5) qui ont chacune une largeur de 10 à 35 % de la largeur (TW) de la bande de roulement, à partir des bords de cette bande de roulement, des fentes (2) qui ont une profondeur (D) comprise entre 20 et 120 % de la profondeur (Do) de la gorge (G) et qui sont placées à des intervalles (T) de 8 à 20 mm dans la direction circonférentielle du pneumatique et suivant un angle (AL) compris entre 5 et 25° par rapport à la direction axiale du pneumatique, caractérisé en ce que chaque fente (2) a une partie (S1) qui est parallèle à la direction axiale du pneumatique.

2. Pneumatique à carcasse radiale selon la revendication 1, caractérisé en ce que les fentes (2) ont une profondeur qui augmente progressivement vers les bords respectifs de la bande de roulement.

3. Pneumatique à carcasse radiale selon l'une des revendications 1 et 2, caractérisé en ce que la largeur (GW) de chaque gorge circonférentielle (G1, G2) est comprise entre 5 et 8 % de la largeur (TW) de la bande de roulement.

**Patentansprüche**

1. Radialreifen mit einem Laufstreifen (1), der mit einer Vielzahl von sich in Umfangsrichtung des Reifens zur Bildung eines Rippenmusters daran erstreckenden Nuten (G) versehen ist und in beiden Seitenabschnitten (R4, R5), die jeweils eine Breite von 10 bis 35% der Laufstreifenbreite (TW) von den Laufstreifenkanten besitzen, mit Einschnitten (2) versehen ist, wobei die Einschnitte eine Tiefe (D) von 20 bis 120% einer Tiefe (Do) der Nut (G) besitzen und mit Abständen (T) von 8 bis 20 mm in Umfangsrichtung des Reifens und mit einem Winkel (AL) von 5 bis 25° bezüglich der Axialrichtung des Reifens angeordnet sind, dadurch gekennzeichnet, daß jeder Einschnitt (2) mit einem zur Axialrichtung des Reifens parallelen Abschnitt (S1) versehen ist.

2. Radialreifen nach Anspruch 1, dadurch gekennzeichnet, daß die Einschnitte (2) allmählich zu den jeweiligen Laufstreifenkanten hin zunehmende Tiefe besitzen.

3. Radialreifen nach einem der Ansprüche 1 bis 2, dadurch gekennzeichnet, daß die Breite (GW) jeder Umfangsnut (G1, G2) 5 bis 8% der Laufstreifenbreite (TW) beträgt.

# FIG.1

# FIG.2

# FIG.3

# FIG.4

# FIG.5

# FIG.6

## FIG.7

## FIG.8

## FIG.9

# FIG.10

S

SW

# FIG.11

C

S

SR    SG    SB